# DEMANDE DE BREVET EUROPEEN

(11) **EP 2 950 238 A1**
(43) Date de publication de la demande: **02.12.2015**
(21) Numéro de dépôt: 15169137.5
(22) Date de dépôt: 26.05.2015
(51) Int. Cl.: G06K 9/20, G06K 7/14

(54) **PROCÉDÉ DE DÉTECTION D'UN CODE À BARRES À DEUX DIMENSIONS DANS UNE IMAGE D'UN DOCUMENT NUMÉRISÉ**

(30) Priorité: 27.05.2014 FR 1454767
(71) Demandeur: SAGEMCOM DOCUMENTS SAS, 92500 Rueil Malmaison (FR)
(72) Inventeur: Carrie, Aurore, 92500 RUEIL MALMAISON (FR); Berger, Jérôme, 92500 RUEIL MALMAISON (FR)
(74) Mandataire: Maillet, Alain

(57) **Abrégé**

L'invention concerne un procédé de détection d'un code à barres à deux dimensions dans une image d'un document numérisé. Le procédé comporte les étapes de :
- filtrage (E702) passe bande de l'image numérisée,
- identification (E703) d'au moins une fenêtre dans l'image filtrée qui est susceptible de correspondre à un code à barres à deux dimensions,
- recherche (E704) dans chaque partie de l'image numérisée correspondant à une fenêtre identifiée d'une zone de synchronisation du code à barres à deux dimensions,
- identification (E706) d'une marque dans chaque zone de l'image numérisée comprenant une partie de l'image numérisée correspondant à une fenêtre identifiée comprenant une zone de synchronisation,
- traitement (E711) du document numérisé conformément aux données comprises dans le code à barres à deux dimensions si une marque est identifiée dans au moins une partie de l'image numérisée.

## Description

La présente invention concerne un procédé et un dispositif de détection d'un code à barres à deux dimensions dans une image d'un document numérisé.

Les codes à barres à deux dimensions sont largement utilisés aujourd'hui. De nombreuses applications utilisent les codes à barres à deux dimensions en tant que support d'informations. Les plus répandues sont destinées à être installées sur un téléphone mobile intelligent et permettent à l'utilisateur d'obtenir facilement des informations concernant un objet sur lequel le code à barres à deux dimensions est apposé. Ces informations sont par exemple l'adresse d'un site internet, des informations de contact. Ces applications comptent sur l'utilisateur du téléphone mobile pour isoler le code à barres à deux dimensions et fournir une image qui contient uniquement le code à barres à deux dimensions.

D'autres applications existent dans le domaine de la robotique qui permettent de détecter des codes à barres à deux dimensions dans une image plus globale. Ces applications sont cependant très lentes car elles doivent tenir compte d'une grande variété de conditions de prise de vue telles que la luminosité, le contraste et les déformations liées à la perspective.

La gestion électronique de documents numérisés, comme par exemple l'archivage de documents numérisés, nécessite souvent des ressources importantes en termes de capacité de calcul des machines qui effectuent automatiquement celui-ci. Pouvoir sans erreurs déterminer le type de document à archiver, comme par exemple les factures, les contrats, les devis, est bien souvent une tâche difficile.

La présente invention a pour but de résoudre les inconvénients de l'art antérieur en proposant un procédé et un dispositif de détection d'un code à barres à deux dimensions dans une image d'un document numérisé qui facilite l'archivage d'un document numérisé et qui soit suffisamment fiable pour distinguer parmi les différents codes à barres à deux dimensions existant actuellement ceux qui sont dédiés à l'application d'archivage.

A cette fin, selon un premier aspect, l'invention propose un procédé de détection d'un code à barres à deux dimensions dans une image d'un document numérisé, caractérisé en ce que le procédé comporte les étapes de :
- filtrage passe bande de l'image numérisée,
- identification d'au moins une fenêtre dans l'image filtrée qui est susceptible de correspondre à un code à barres à deux dimensions,
- recherche dans chaque partie de l'image numérisée correspondant à une fenêtre identifiée d'une zone de synchronisation du code à barres à deux dimensions,
- identification d'une marque dans chaque zone de l'image numérisée comprenant une partie de l'image numérisée correspondant à une fenêtre identifiée comprenant une zone de synchronisation,
- traitement du document numérisé conformément aux données comprises dans le code à barres à deux dimensions si une marque est identifiée dans au moins une partie de l'image numérisée.

La présente invention concerne aussi un dispositif de détection d'un code à barres à deux dimensions dans une image d'un document numérisé, caractérisé en ce que le dispositif comporte :
- des moyens de filtrage passe bande de l'image numérisée,
- des moyens d'identification d'au moins une fenêtre dans l'image filtrée qui est susceptible de correspondre à un code à barres à deux dimensions,
- des moyens de recherche dans chaque partie de l'image numérisée correspondant à une fenêtre identifiée d'une zone de synchronisation du code à barres à deux dimensions,
- des moyens d'identification d'une marque dans chaque zone de l'image numérisée comprenant une partie de l'image numérisée correspondant à une fenêtre identifiée comprenant une zone de synchronisation,
- des moyens de traitement du document numérisé conformément aux données comprises dans le code à barres à deux dimensions si une marque est identifiée dans au moins une partie de l'image numérisée.

Ainsi, la gestion électronique d'un document numérisé est rapide et est facilitée par les informations comprises dans le code à barres à deux dimensions. La présence d'une marque dans le document qui soit reconnaissable visuellement et identifiable par un dispositif de détection rend l'identification des codes à barres dédiés à la gestion du document, comme par exemple son archivage, suffisamment fiable pour distinguer ceux-ci des différents codes à barres à deux dimensions existant actuellement.

Selon un mode particulier de l'invention, l'identification d'au moins une fenêtre dans l'image filtrée qui est susceptible de correspondre à un code à barres à deux dimensions est effectuée à partir d'un algorithme de P. Viola & M. Jones.

Ainsi, il est possible de détecter rapidement des codes à barres à deux dimensions dans une image. Ce procédé est capable d'écarter très rapidement les zones de l'image qui ne contiennent visiblement pas de codes à barres à deux dimensions afin de se concentrer sur les zones dont le contenu ressemble à un code à barres à deux dimensions.

Selon un mode particulier de l'invention, préalablement au filtrage, on effectue une mise à l'échelle de l'image.

Ainsi, les traitements post mise à l'échelle sont simplifiés car la taille du code à barres à deux dimensions est ainsi connue.

Selon un mode particulier de l'invention, préalablement à l'étape de traitement du document mémorisé, on décode le code à barres à deux dimensions et on vérifie si une erreur prédéterminée est détectée lors du décodage et le traitement du document numérisé est effectué si l'erreur prédéterminée est détectée.

Ainsi, la fiabilité de la détection du code à barres à deux dimensions est augmentée. Le risque qu'un document soit traité d'une mauvaise manière est grandement atténué.

Selon un mode particulier de l'invention, le code à barres à deux dimensions est imprimé sur une étiquette pour être placée sur le document numérisé.

Selon un mode particulier de l'invention, on insère une marque visuelle dans une zone du code à barres réservée aux données, on insère des données représentatives d'un traitement à effectuer sur le document numérisé dans la zone d'un code à barres réservée aux données et on insère des données redondantes de code correcteur d'erreurs dans une zone du code à barres différente de la zone du code à barres réservée aux données, les données redondantes étant déterminées à partir de la marque et des données représentatives du traitement à effectuer.

Ainsi, l'archivage d'un document numérisé est facilité par les informations comprises dans le code à barres à deux dimensions. La présence d'une marque dans le document rend l'identification des codes à barres dédiés à l'application d'archivage suffisamment fiable pour distinguer ceux-ci des différents codes à barres à deux dimensions existant actuellement.

Selon un mode particulier de l'invention, on modifie au moins une partie de la marque insérée.

Ainsi, la présente invention est capable de traiter certains cas où il est possible que la marque insérée impose aux tuiles des valeurs impossibles à interpréter en utilisant les règles de lectures du code à barres. De plus en modifiant la marque, à la lecture du code à barres comportant la marque, une erreur sera détectée et corrigée. Cette détection d'erreur peut avantageusement selon la présente invention servir de confirmation supplémentaire à la détection du code à barres formé par la présente invention.

L'invention concerne aussi une étiquette comportant un code à barres à deux dimensions, caractérisée en ce que le code à barres à deux dimensions comporte une zone réservée aux données comprenant une marque et de données représentatives d'un traitement à effectuer sur le document numérisé et une zone comportant des données redondantes d'un code correcteur d'erreurs.

Ainsi l'archivage d'un document numérisé est facilité par les informations comprises dans le code à barres à deux dimensions. La présence d'une marque dans le document rend l'identification des codes à barres dédiés à la gestion du document, comme par exemple son archivage, suffisamment fiable pour distinguer ceux-ci des différents codes à barres à deux dimensions existant actuellement.

Selon un mode particulier de l'invention, des données redondantes d'un code correcteur d'erreurs sont obtenues à partir d'une marque dont une partie est différente de la marque comprise dans la zone réservée aux données de l'étiquette.

Ainsi, la présente invention est capable de traiter certains cas où il est possible que la marque insérée impose aux tuiles des valeurs impossibles à interpréter en utilisant les règles de lecture du code à barres. De plus en modifiant la marque, à la lecture du code à barres comportant la marque, une erreur sera détectée et corrigée. Cette détection d'erreur peut avantageusement selon la présente invention servir de confirmation supplémentaire à la détection du code à barres formé par la présente invention.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système de génération de code à barres à deux dimensions et de détection de code à barres à deux dimensions selon la présente invention ;
la Fig. 2 représente un dispositif de génération de code à barres à deux dimensions selon la présente invention ;
la Fig. 3 représente un dispositif de détection de code à barres à deux dimensions selon la présente invention ;
la Fig. 4 représente un algorithme de génération de code à barres à deux dimensions selon la présente invention ;
la Fig. 5 représente différentes zones d'un code à barres à deux dimensions dans lequel une marque est insérée selon la présente invention ;
la Fig. 6 représente un code à barres à deux dimensions dans lequel une marque est insérée selon la présente invention ;
la Fig. 7 représente un algorithme de détection de code à barres à deux dimensions selon la présente invention ;
la Fig. 8 représente une zone de synchronisation de code à barres à deux dimensions.

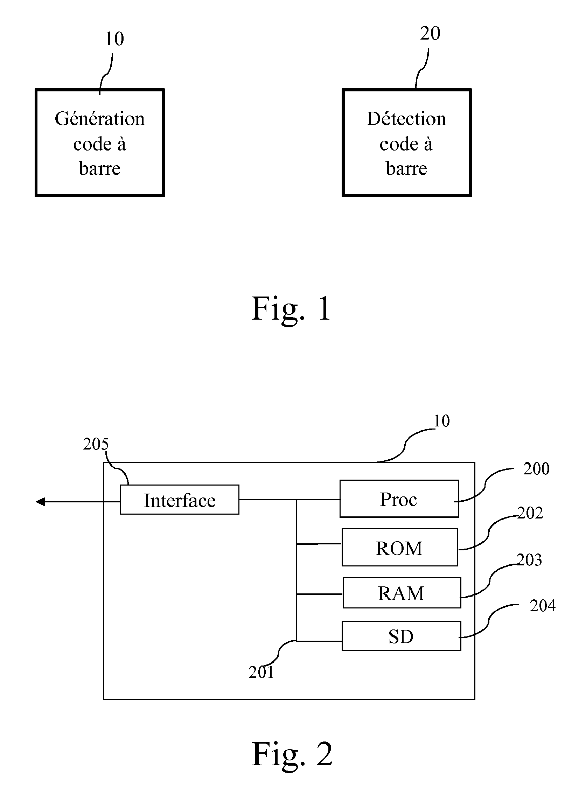

La **Fig. 1** représente un système de génération de code à barres à deux dimensions et de détection de code à barres à deux dimensions selon la présente invention.

Le système comporte un dispositif de génération de code à barres à deux dimensions 10 ainsi qu'un dispositif de détection d'un code à barres à deux dimensions 20.

Le dispositif de génération de code à barres 10 à deux dimensions insère dans la partie réservée aux données utiles du code à barres une marque visuellement détectable. La marque est associée à un service, par exemple un service d'archivage, de classement de documents. En outre, le dispositif de génération de code à barres 10 à deux dimensions insère dans la partie réservée aux données utiles du code à barres des données représentatives associées à l'archivage du document. Ces données sont par exemple une référence associée au document comme par exemple une facture.

Le dispositif de génération de code à barres 10 à deux dimensions insère dans la partie réservée aux redondances du code à barres, des informations permettant à un code correcteur d'erreurs de détecter et corriger d'éventuelles erreurs de lecture des données comprises dans la partie utile du code à barres ou dans la partie réservée aux redondances.

Le dispositif de génération de code à barres 10 à deux dimensions commande l'impression du code à barres formé selon la présente invention sous la forme par exemple d'une étiquette autocollante.

L'étiquette autocollante est par exemple apposée sur un document à numériser.

Le dispositif de détection d'un code à barres à deux dimensions 20 est par exemple intégré à un scanner.

Le dispositif de détection d'un code à barres à deux dimensions 20 détecte et décode des codes à barres à deux dimensions sur une image lorsque lesdits codes à barres sont générés par le dispositif de génération de code à barres 10.

Le dispositif de détection d'un code à barres à deux dimensions 20 effectue :
- un filtrage passe bande de l'image numérisée,
- une identification d'au moins une fenêtre dans l'image filtrée qui est susceptible de correspondre à un code à barres à deux dimensions,
- une recherche dans chaque partie de l'image numérisée correspondant à une fenêtre identifiée d'une zone de synchronisation du code à barres à deux dimensions,
- une identification d'une marque dans chaque zone de l'image numérisée comprenant une partie de l'image numérisée correspondant à une fenêtre identifiée comprenant une zone de synchronisation,
- un traitement du document numérisé conformément aux données comprises dans le code à barres à deux dimensions si une marque est identifiée dans au moins une partie de l'image numérisée.

La **Fig. 2** représente un dispositif de génération de code à barres à deux dimensions selon la présente invention.

Le dispositif de génération de code à barres à deux dimensions 10 comprend :
- un processeur, micro-processeur, ou microcontrôleur 200 ;
- une mémoire volatile 203 ;
- une mémoire non volatile 202;
- éventuellement, un lecteur 204 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 205 avec un réseau de communication, comme par exemple un réseau local ou Internet par laquelle les codes à barres générés par le dispositif de génération de code à barres à deux dimensions 10 sont transférés à un dispositif d'impression.
- un bus de communication reliant le processeur 200 à la mémoire ROM 203, à la mémoire RAM 203, au lecteur de médium de stockage 204 et à l'interface 205.

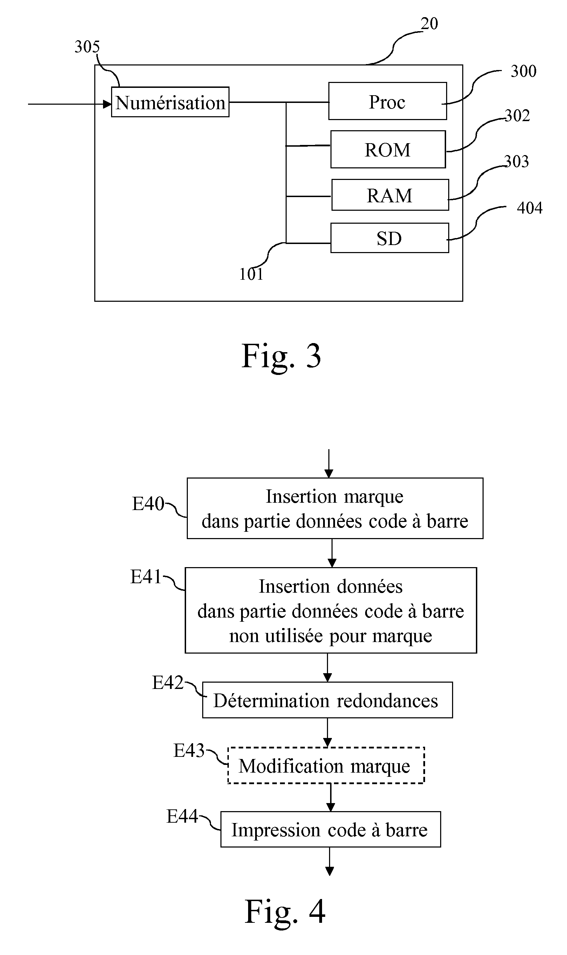

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de génération de code à barres à deux dimensions 10 est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un dispositif de détection de code à barres à deux dimensions selon la présente invention.

Le dispositif de détection de code à barres à deux dimensions 20 comprend :
- un processeur, micro-processeur, ou microcontrôleur 300 ;
- une mémoire volatile 303 ;
- une mémoire non volatile 302;
- éventuellement, un lecteur 304 de médium de stockage, tel qu'un lecteur de carte SD (*Secure Digital Car* en anglais ou *Carte Numérique Sécurisée* en français) ou un disque dur pour mémoriser les documents traités par la présente invention ;
- un dispositif de numérisation d'un document 305 tel qu'un scanner qui numérise des documents sous la forme d'images.
- un bus de communication reliant le processeur 300 à la mémoire ROM 303, à la mémoire RAM 303, au lecteur de médium de stockage 304 et au dispositif de numérisation d'un document 305.

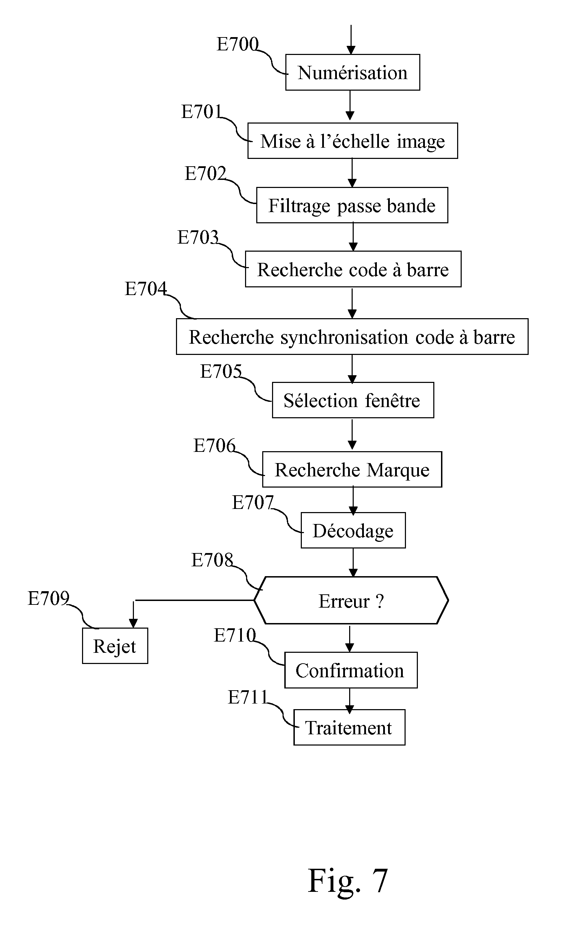

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le dispositif de détection de codes à barres à deux dimensions 20 est mis sous tension, le processeur 300 est capable de lire de la mémoire volatile 303 des instructions et de les exécuter. Ces instructions forment un programme d'ordinateur qui cause la mise en oeuvre, par le processeur 300, de tout ou partie du procédé décrit en relation avec la Fig. 7.

Tout ou partie du procédé décrit en relation avec la Fig. 7 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 4** représente un algorithme de génération de code à barres à deux dimensions selon la présente invention.

Plus précisément, le présent algorithme est exécuté par le processeur 200 du dispositif de génération de code à barres à deux dimensions 10.

Le présent algorithme est décrit dans un exemple où les codes à barres à deux dimensions sont des codes à barres de type DataMatrix. Le code DataMatrix permet de représenter une quantité importante d'informations sur une surface réduite. Le code Datamatrix répond à la norme ISO/CEI 16022. L'homme de l'art saura adapter la présente invention à tout autre type de code à barres à deux dimensions connu.

A l'étape E40, le processeur 200 insère une marque visuellement reconnaissable dans la partie comprenant les données utiles du code à barres. Par exemple la marque est un logo, un chiffre ou une lettre.

Un code à barres Datamatrix est constitué d'au moins deux zones ou parties.

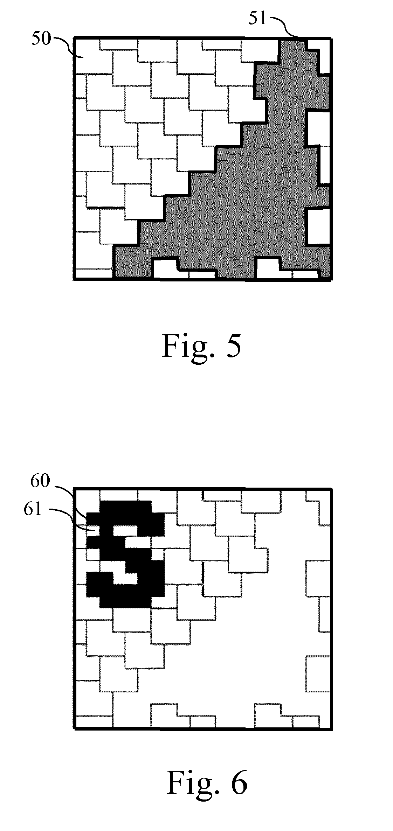

La **Fig. 5** représente différentes zones d'un code à barres à deux dimensions dans lequel une marque est insérée selon la présente invention.

Les codes à barres à deux dimensions contiennent généralement trois types de zones. Une zone de synchronisation non représentée en Fig. 5 est identique pour tous les codes à barres à deux dimensions du même type. Une zone de données 50 qui contient les données utiles du code à barres à deux dimensions. Une zone de sécurité 51 qui contient des données de codes correcteurs d'erreurs permettant de reconstituer les données utiles lorsque le code à barres à deux dimensions est endommagé ou lorsque la lecture du code à barres comporte des erreurs.

La zone de donnée 50 et la zone de sécurité 51 sont généralement découpées en tuiles de 8 pixels, chaque tuile étant capable de représenter un nombre entre 0 et 255 inclus. Seules les tuiles de la zone de données 50 sont représentées en Fig. 5.

La marque insérée est représentée à la Fig. 6.

La **Fig. 6** représente un code à barres à deux dimensions dans lequel une marque est insérée selon la présente invention.

La marque insérée est dans l'exemple de la Fig. 6 un « S ». La marque est insérée à une position prédéterminée et constante pour l'application. L'insertion de la marque impose une valeur aux tuiles que la marque recouvre. Les valeurs des autres tuiles restent libres et peuvent donc contenir des données utiles. Les tuiles recouvertes par la marque ont une valeur imposée par la marque. Par exemple pour un code à barres DataMatrix utilisant le codage C40, la marque en forme de « S » de la Fig. 6 correspond à toutes les chaînes de caractères similaires à la chaîne de caractères : « IBJRGKFQCCAJ26YLJZ......008FQOR............. ». Les points de la chaîne de caractères sont utilisés pour insérer des données associées à l'archivage d'un document sur lequel le code à barres à deux dimensions sera apposé. Ces données sont par exemple une référence associée au document comme par exemple un numéro de facture.

A l'étape suivante E41, le processeur 200 insère dans les tuiles de la zone comprenant des données, les données associées à l'archivage d'un document sur lequel le code à barres à deux dimensions sera apposé.

A l'étape suivante E42, le processeur 200 détermine les redondances associées à la marque et aux données associées à l'archivage d'un document sur lequel le code à barres à deux dimensions sera apposé et les insère dans la partie réservée aux redondances du code à barres. Les redondances permettent à un code correcteur d'erreurs de détecter et corriger d'éventuelles erreurs de lecture des données comprises dans la partie utile du code à barres ou dans la partie réservée aux redondances.

Dans un mode particulier de réalisation de la présente invention, le processeur 200 passe à l'étape E43. Dans un autre mode de réalisation, le processeur 200 passe de l'étape E42 à l'étape E44.

A l'étape E43, le processeur 200 modifie la marque insérée. Il est possible que la marque insérée impose aux tuiles des valeurs impossibles à interpréter en utilisant les règles de lectures du code à barres. Dans l'exemple de la Fig. 6, la marque « S » 60 comporte une encoche 61 de manière à ce que les valeurs des tuiles soient interprétables lors de la lecture.

A l'étape E43, le processeur 200 supprime l'encoche 61. A la lecture du code à barres comportant la marque, une erreur sera détectée et corrigée. Cette détection d'erreur peut avantageusement selon la présente invention servir de confirmation supplémentaire à la détection du code à barres formé par la présente invention.

A l'étape E44, le processeur 200 commande l'impression du code à barres ainsi formé.

La **Fig. 7** représente un algorithme de détection de code à barres à deux dimensions selon la présente invention.

Plus précisément, le présent algorithme est exécuté par le processeur 300 du dispositif de détection de code à barres à deux dimensions 20.

Le présent algorithme est décrit dans un exemple où les codes à barres à deux dimensions sont des codes à barres de type DataMatrix.

A l'étape E700, le processeur 300 reçoit une image constituée de pixels représentatifs d'un document numérisé.

A l'étape suivante E701, le processeur 300 adapte la résolution de l'image pour que le code à barres à deux dimensions ait une taille prédéterminée par exemple pour que deux fois deux pixels de l'image soient représentatifs d'un point d'un code à barres à deux dimensions formé par le dispositif de génération de code à barres à deux dimensions 10.

A l'étape suivante E702, le processeur 300 exécute un filtrage passe bande sur les pixels de l'image redimensionnée.

Par exemple le processeur 300 utilise un filtre dont les coefficients sont :

| | | | | | |
|---|---|---|---|---|---|
| 0 | 0 | 1 | 1 | 0 | 0 |
| 0 | 0 | 1 | -1 | 0 | 0 |
| 1 | 1 | 4 | 4 | 1 | 1 |
| 1 | 1 | 4 | 4 | 1 | 1 |
| 0 | 0 | 1 | 1 | 0 | 0 |
| 0 | 0 | 1 | 1 | 0 | 0 |

Le processeur 300 mémorise la valeur absolue du résultat du filtrage pour chaque pixel.

A l'étape suivante E703, le processeur 300 commande la recherche d'un code à barres à deux dimensions dans l'image filtrée.

Par exemple, la recherche est effectuée en utilisant l'algorithme de P. Viola & M. Jones intitulé « Robust Real-time Object Detection » et publié au 2^{nd} International Workshop on Statistical and Computational Theories of Vision en 2001. L'algorithme de P. Viola & M. Jones fonctionne par apprentissage. Dans un premier temps, des exemples d'images filtrées de taille légèrement supérieure à un code à barres à deux dimensions, par exemple de 68x68 pixels et contenant un code à barres à deux dimensions selon la présente invention sont soumises à l'algorithme et des contre-exemples d'images filtrées de même taille et ne comportant pas de code à barres à deux dimensions ou comportant un code à barres à deux dimensions différent de celui produit par la présente invention sont aussi soumises à l'algorithme. Cette étape d'apprentissage est effectuée une seule fois pour chaque type de code à barres à deux dimensions formé par la présente invention. L'apprentissage fournit un jeu de paramètres qui sont mémorisés pour être réutilisés.

Dans un second temps, pour chaque image filtrée, le processeur 300 balaye l'image filtrée avec une fenêtre de la taille utilisée pour l'apprentissage, par exemple 68x68 pixels et l'algorithme de Viola-Jones indique si la fenêtre est susceptible ou non de contenir un code à barres à deux dimensions selon la présente invention.

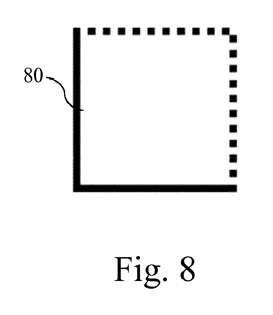

A l'étape suivante E704, le processeur 300 cherche dans chaque partie de l'image non filtrée qui correspond à une fenêtre susceptible de contenir un code à barres à deux dimensions selon la présente invention, une zone de synchronisation. Un exemple de zone de synchronisation est donné dans la Fig. 8.

La **Fig. 8** représente une zone de synchronisation de code à barres à deux dimensions.

La zone de synchronisation est notée 80 en Fig. 8.

La zone de synchronisation permet aussi de déterminer l'orientation du code à barres à deux dimensions.

A l'étape suivante E705, le processeur 300 sélectionne chaque partie de l'image non filtrée pour laquelle une zone de synchronisation a été trouvée.

A l'étape suivante E706, le processeur 300 recherche une marque dans une zone de l'image comprenant une partie d'image sélectionnée. Cette recherche peut se faire en calculant la corrélation entre la marque attendue et la partie de l'image sélectionnée.

En variante, le processeur 300 recherche la marque en décodant le code à barres à deux dimensions et en comparant les données contenues dans celui-ci avec le modèle de chaîne de caractères attendu. Selon l'exemple susmentionné, le processeur 300 compare les données contenues dans le code à barres à deux dimensions avec la chaîne de caractères « IBJRGKFQCCAJ26YLJZ......008FQOR............. ».

Si un décodage du code à barres à deux dimensions n'a pas été effectué, le processeur 300 passe à l'étape E707 et décode le code à barres à deux dimensions.

Dans un mode particulier de réalisation de la présente invention, le processeur 300 passe de l'étape E707 à l'étape E708. Ce mode correspond au mode de réalisation de l'algorithme de génération de code à barres à deux dimensions comportant l'étape E43. Dans un autre mode de réalisation, le processeur 300 passe de l'étape E707 à l'étape E711. Cet autre mode correspond au mode de réalisation de l'algorithme de génération de codes à barres à deux dimensions ne comportant pas l'étape E43.

A l'étape E708, le processeur 300 vérifie si une erreur prédéterminée a été détectée lors du décodage du code à barres à deux dimensions. L'erreur prédéterminée correspond à une modification à l'étape E43 de la marque insérée.

Si l'erreur prédéterminée est détectée, le processeur 300 passe à l'étape E710. Dans la négative, le processeur 300 passe à l'étape E709.

A l'étape E709, le code à barres à deux dimensions est rejeté.

A l'étape E710, la détection de la modification de la marque insérée confirme que le code à barres à deux dimensions décodé correspond bien à un code à barres selon la présente invention.

A l'étape E711, un traitement de l'image numérisée est effectué conformément aux données utiles comprises dans le code à barres à deux dimensions.

Bien entendu, la présente invention n'est nullement limitée aux modes de réalisation décrits ici, mais englobe, bien au contraire, toute variante à la portée de l'homme du métier et particulièrement la combinaison de différents modes de réalisation de la présente invention.

Par exemple, la marque insérée dans le code à barres est en variante insérée à côté du code à barres à deux dimensions.

## Revendications

1. Procédé de détection d'un code à barres à deux dimensions dans une image d'un document numérisé, **caractérisé en ce que** le procédé comporte les étapes de :
- filtrage (E702) passe bande de l'image numérisée,
- identification (E703) d'au moins une fenêtre dans l'image filtrée qui est susceptible de correspondre à un code à barres à deux dimensions,
- recherche (E704) dans chaque partie de l'image numérisée correspondant à une fenêtre identifiée d'une zone de synchronisation du code à barres à deux dimensions,
- identification (E706) d'une marque visuelle prédéterminée dans une zone du code à barres réservée aux données et correspondant à une fenêtre identifiée comme comprenant une zone de synchronisation, la marque visuelle étant un logo un chiffre ou une lettre,
- traitement (E711) du document numérisé conformément aux données comprises dans le code à barres à deux dimensions si une marque est identifiée dans au moins une partie de l'image numérisée.

2. Procédé selon la revendication 1, **caractérisé en ce que** l'identification d'au moins une fenêtre dans l'image filtrée qui est susceptible de correspondre à un code à barres à deux dimensions est effectuée à partir d'un algorithme par apprentissage dans lequel des images contenant un code à barres à deux dimensions et la marque visuelle prédéterminée et des contre-exemples d'images filtrées contenant un code à barres à deux dimensions sont soumises à l'algorithme pour obtenir un jeu de paramètres destinés à l'identification d'au moins une fenêtre dans l'image filtrée qui est susceptible de correspondre à un code à barres à deux dimensions dans lequel la marque visuelle prédéterminée est insérée.

3. Procédé selon l'une quelconque des revendications précédentes, **caractérisé en ce que** le procédé comporte en outre une étape (E701), effectuée préalablement au filtrage, de mise à l'échelle de l'image.

4. Procédé selon l'une quelconque des revendications précédentes, **caractérisé en ce que** le procédé comporte en outre, préalablement à l'étape de traitement du document mémorisé une étape de décodage (E707) du code à barres à deux dimensions et de vérification (E708) si une erreur prédéterminée est détectée lors du décodage et **en ce que** le traitement du document numérisé est effectué si l'erreur prédéterminée est détectée.

5. Procédé selon l'une quelconque des revendications précédentes, **caractérisé en ce que** le procédé comporte l'étape d'impression du code à barres à deux dimensions sur une étiquette.

6. Procédé selon l'une quelconque des revendications 1 à 5, **caractérisé en ce que** le procédé comporte en outre les étapes de :
- insertion d'une marque visuelle dans une zone du code à barres réservée aux données,
- insertion de données représentatives d'un traitement à effectuer sur le document numérisé dans la zone d'un code à barres réservée aux données,
- insertion de données redondantes de code correcteur d'erreurs dans une zone du code à barres différente d'une zone du code à barres réservée aux données, les données redondantes étant déterminées à partir de la marque et des données représentatives du traitement à effectuer.

7. Procédé selon la revendication 6, **caractérisé en ce que** le procédé comporte en outre l'étape de modification d'au moins une partie de la marque insérée.

8. Etiquette comportant un code à barres à deux dimensions, **caractérisée en ce que** le code à barres à deux dimensions comporte une zone réservée aux données comprenant une marque et de données représentatives d'un traitement à effectuer sur le document numérisé et une zone comportant des données redondantes d'un code correcteur d'erreurs.

9. Etiquette selon la revendication 8, **caractérisée en ce que** des données redondantes d'un code correcteur d'erreurs sont obtenues à partir d'une marque dont une partie est différente de la marque comprise dans la zone réservée aux données de l'étiquette.

10. Dispositif de détection d'un code à barres à deux dimensions dans une image d'un document numérisé, **caractérisé en ce que** le dispositif comporte :
- des moyens de filtrage passe bande de l'image numérisée,
- des moyens d'identification d'au moins une fenêtre dans l'image filtrée qui est susceptible de correspondre à un code à barres à deux dimensions,
- des moyens de recherche dans chaque partie de l'image numérisée correspondant à une fenêtre identifiée d'une zone de synchronisation du code à barres à deux dimensions,
- des moyens d'identification d'une marque visuelle prédéterminée dans une zone du code à barres réservée aux données et correspondant à une fenêtre identifiée comme comprenant une zone de synchronisation, la marque visuelle étant un logo un chiffre ou une lettre,
- des moyens de traitement du document numérisé conformément aux données comprises dans le code à barres à deux dimensions si une marque est identifiée dans au moins une partie de l'image numérisée.
